# EUROPÄISCHE PATENTSCHRIFT

(11) **EP 1 733 612 B1**
(45) Veröffentlichungstag und Bekanntmachung des Hinweises auf die Patenterteilung: **09.04.2008**
(21) Anmeldenummer: 06011453.5
(22) Anmeldetag: 02.06.2006
(51) Int. Cl.: A01G 3/053

(54) **Heckenschere**
Hedge trimmer
Taille-haie

(30) Priorität: 14.06.2005 DE 102005027288
(43) Veröffentlichungstag der Anmeldung: 20.12.2006
(73) Patentinhaber: Wolf-Garten AG, 4702 Oensingen (CH)
(72) Erfinder: Orthey, Gebhard, 57583 Nauroth (DE)
(74) Vertreter: Koch, Günther

(56) Entgegenhaltungen:
- EP-A- 0 267 472
- DE-A1- 3 114 906
- DE-A1- 10 260 466
- DE-A1- 19 640 653

## Beschreibung

Die Erfindung bezieht sich auf eine Heckenschere der im Oberbegriff des Patentanspruchs 1 angegebenen Gattung. Bei den üblichen Heckenscheren ist das die Messer tragende Motoraggregat fest in das Griffgehäuse eingebaut, so dass die Schneidebene der Messer gegenüber dem Gehäuse festgelegt ist und die Lage der Schneidebene über die Handgriffe für die unterschiedlichen Schneidsituationen festgelegt werden muss.

Zur bequemeren Handhabung derartiger Heckenscheren ist es z.B. aus der DE 102 60 466 A1 bekannt, den hinteren Handgriff über ein Drehgelenk mit dem Griffgehäuse zu verbinden, das den vorderen Traggriff und das Motoraggregat mit Schneidmessern trägt. Die Achse dieses Drehgelenkes verläuft in Längsrichtung der Schere, so dass die Bedienungsperson den hinteren Handgriff in die für sie günstigste Stellung einstellen kann, wenn die Scherenblätter mit ihrer Schneidebene den jeweiligen Verhältnissen entsprechend gerichtet werden. Der vordere als Traggriff ausgebildete Handgriff steht dabei gegenüber den Messern und der Schneidebene fest, so dass nur bei Horizontalschnitt eine günstige Abstützung möglich ist.

In der Praxis muss jedoch beim Schnitt einer Hecke überwiegend ein Vertikalschnitt durchgeführt werden, und der Erfindung liegt daher die Aufgabe zugrunde, eine Heckenschere zu schaffen, die auf die jeweilige Schneidsituation einstellbar ist und in der eingestellten Stellung eine ergonometrisch optimale Handhabung gewährleistet.

Gelöst wird die gestellte Aufgabe durch die im Kennzeichnungsteil des Patentanspruchs 1 angegebenen Merkmale. Das Wesen der Erfindung liegt demgemäß darin, dass im Gegensatz zu den bekannten Scheren nicht nur der hintere Griff, sondern auch der vordere Traggriff verschwenkbar mit dem Griffgehäuse verbunden ist, so dass eine optimale Einstellung zwischen Horizontalschnitt und Vertikalschnitt erfolgen kann.

Es ist zwar durch die DE 196 40 653 A1 eine motorbetriebene Heckenschere bekannt geworden, bei der die Schneidebene der Messer gegenüber einem Griffgehäuse einstellbar ist, das in fester Winkeleinstellung den hinteren Führungsgriff und den vorderen Traggriff aufweist. Hierbei ist jedoch das Motoraggregat nicht im Bereich des Griffgehäuses angeordnet, sondern an einem im Griffgehäuse verschiebbar und drehbar gelagerten Stiel, an dessen Vorderende der Motorantrieb mit den Messern verschwenkbar gelagert ist. Durch die Stielanordnung soll insbesondere eine verbesserte Schnittführung erreicht werden, um auch an unzugänglichen Bereichen über den Stiel Hecken bzw. Sträucher bearbeiten zu können. Der über die Stielbefestigung bedingte lange Hebelarm setzt jedoch voraus, dass das Antriebsaggregat ein relativ geringes Gewicht aufweisen muss und daher nur eine beschränkte Leistung hat. Die üblichen im Gartenbereich einsetzbaren Heckenscheren benötigen jedoch eine erheblich größere Leistung, so dass das Motorgewicht ausgeglichen zwischen den beiden Handgriffen angeordnet werden muss, um einen möglichst ermüdungsfreien Schnitt durchführen zu können.

Ein weiteres Problem, welches sich bei Heckenscheren stellt, bei denen die mit Schaltbetätigungsgliedern versehenen Handgriffe einzeln oder gemeinsam gegenüber dem Motoraggregat verschwenkbar sind, besteht in der Schaltbetätigungsübertragung zwischen den Betätigungshandgriffen und dem Elektromotor. Eine derartige Schaltbetätigung mit Zweihand-Sicherheitsfunktion kann zwar elektrisch über geeignete, in Reihe geschaltete Mikroschalter vorgenommen werden, wobei die Leitungen axial durch die Gelenke geführt werden, jedoch ist im Allgemeinen eine mechanische Betätigung zu bevorzugen, und der Erfindung liegt weiter die Aufgabe zugrunde, eine derartige mechanische Schaltbetätigungsübertragung zu schaffen, die über eine Drehachse erfolgen kann.

Gelöst wird die gestellte Aufgabe bei einer Heckenschere gemäß Hauptanspruch durch die Merkmale der Ansprüche 3 bis 7.

Eine mechanische Schaltbetätigungsübertragung bei einer Heckenschere zwischen den an den beiden Handgriffen einer Heckenschere vorgesehenen Schaltbetätigungsgliedern und dem Motorschalter ist in der DE 601 00 298 T2 beschrieben. Hier sind jedoch die beiden Handgriffe mit dem Motor in einem einheitlichen Gehäuse untergebracht, und deshalb ergibt sich nicht das Problem der mechanischen Schaltübertragung über ein Drehgelenk. Die Erfindung löst dagegen in zweckmäßiger Weise das Problem der mechanischen Schaltbetätigungsübertragung, bei der das Motoraggregat mit den Schneidmessern schwenkbar gegenüber dem Griffgehäuse mit den beiden daran angeordneten Griffen verschwenkbar ist.

Durch die erfindungsgemäße mechanische Bewegungsübertragungs-Vorrichtung wird außerdem der Forderung Rechnung getragen, eine augenblickliche Stillsetzung der Messer zu gewährleisten, nachdem auch nur ein Betätigungsschaltglied an einem der Griffe losgelassen wurde. Dies geschieht durch Anordnung des Sperrstiftes, der unter Belastung der Feder in eine Nut des Übertragungsgetriebes einfällt, kurz nachdem der elektrische Schalter geöffnet wurde.

Weitere Einzelheiten und Vorteile der Erfindung ergeben sich aus der nachfolgenden Beschreibung eines Ausführungsbeispieles anhand der Zeichnung. In der Zeichnung zeigen:
Fig. 1 zeigt eine perspektivische Ansicht einer erfindungsgemäß ausgebildeten Heckenschere in der Nullstellung;
Fig. 2 zeigt eine perspektivische Ansicht der gleichen Heckenschere mit gegenüber dem Griffgehäuse ausgeschwenktem Motoraggregat;
Fig. 3 ist eine Schnittansicht des Griffgehäuses und des Gehäuses des Motoraggregates zur Veranschaulichung des Schaltbetätigungsgestänges;
Fig. 4 ist eine perspektivische Ansicht des Schaltbetätigungsgestänges in der Schwenkstellung gemäß Fig. 1, wobei der Übersichtlichkeit wegen die Gehäuseteile weggelassen sind;
Fig. 5 ist eine der Fig. 4 entsprechende Ansicht bei ausgeschwenktem Motoraggregat gemäß Fig. 2.

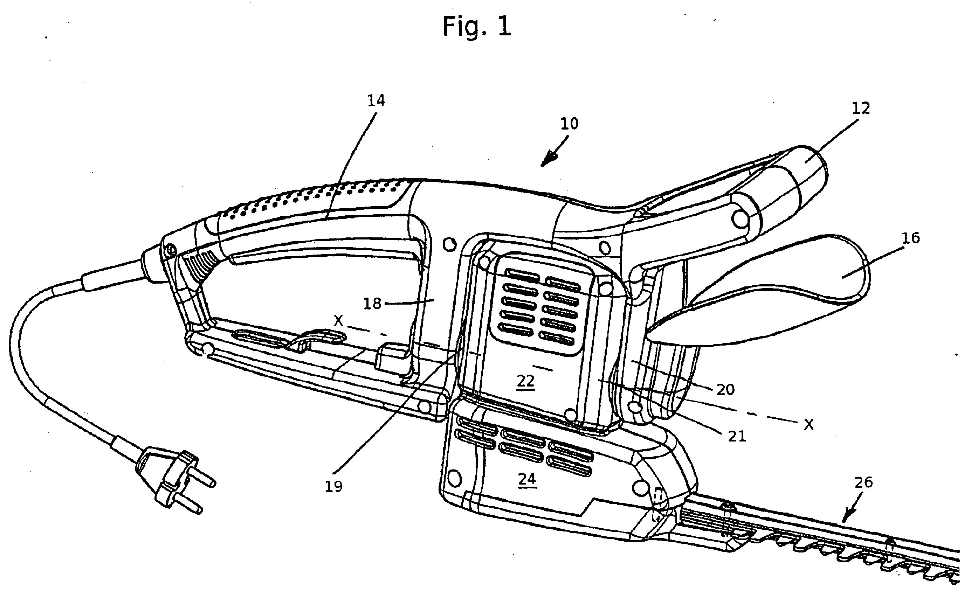

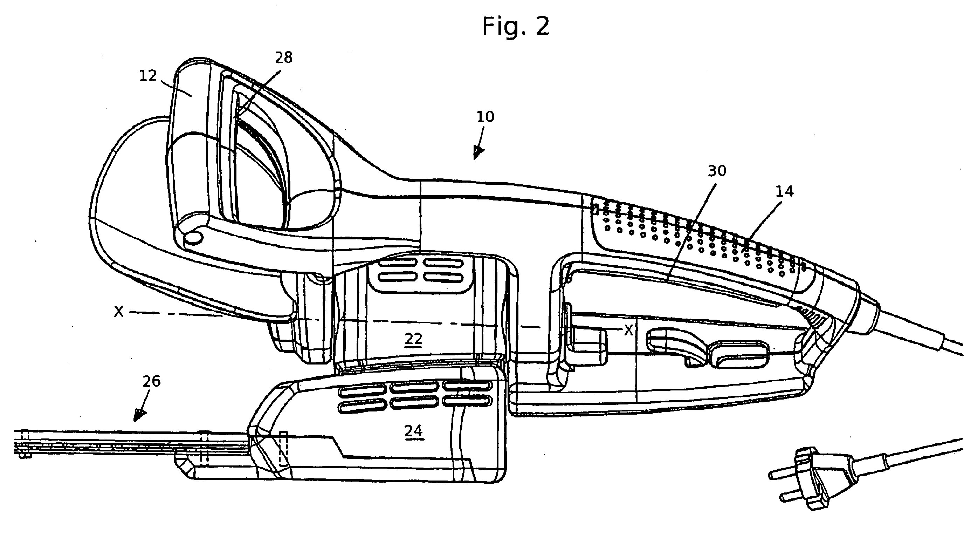

Die in der Zeichnung dargestellte erfindungsgemäße Motorheckenschere weist ein brückenartiges Griffgehäuse 10 mit einem vorderen Handgriff 12 und einem hinteren Handgriff 14 auf. Unter dem vorderen Handgriff 12 ist ein transparenter Schutzschild 16 angebracht. Das Griffgehäuse weist zwei im Abstand parallel zueinander verlaufende Brückenarme 18 und 20 auf, die zwischen sich das Gehäuse 22 eines Elektromotors um eine Achse X - X schwenkbar lagern. Das Gehäuse 22 des Elektromotors ist fest mit einem Gehäuse 24 verbunden, das das Getriebe beherbergt und aus dem nach vorn die Messer 26 vorstehen, die in üblicher Weise gegensinnig angetrieben werden. Das aus Motor und Getriebe bestehende Motoraggregat ist aus der in Fig. 1 dargestellten Grundstellung in beiden Richtungen um die Achse X - X um etwa 90° schwenkbar und in mehreren Schwenkstellungen derart verriegelbar, dass die Verschwenkung nur bei abgeschaltetem Motor und stillstehenden Messern erfolgen kann. Dadurch wird es möglich, sowohl für Rechtshänder als auch für Linkshänder die für den erforderlichen Schnitt jeweils ergonometrisch optimale Griffhaltung einzustellen. Die Fig. 2 zeigt das gegenüber dem Griffgehäuse 10 verschwenkte Motoraggregat in einer um die Achse X - X verschwenkten Stellung. Die Heckenschere ist in üblicher Weise für Zweihandbetrieb ausgebildet und mit Schaltbetätigungsgliedern 28 (für den vorderen Handgriff 12) bzw. 30 (für den hinteren Handgriff 14) ausgerüstet, die beide gleichzeitig betätigt sein müssen, um den Motor an Spannung zu legen und die Messer 26 in Bewegung zu setzen.

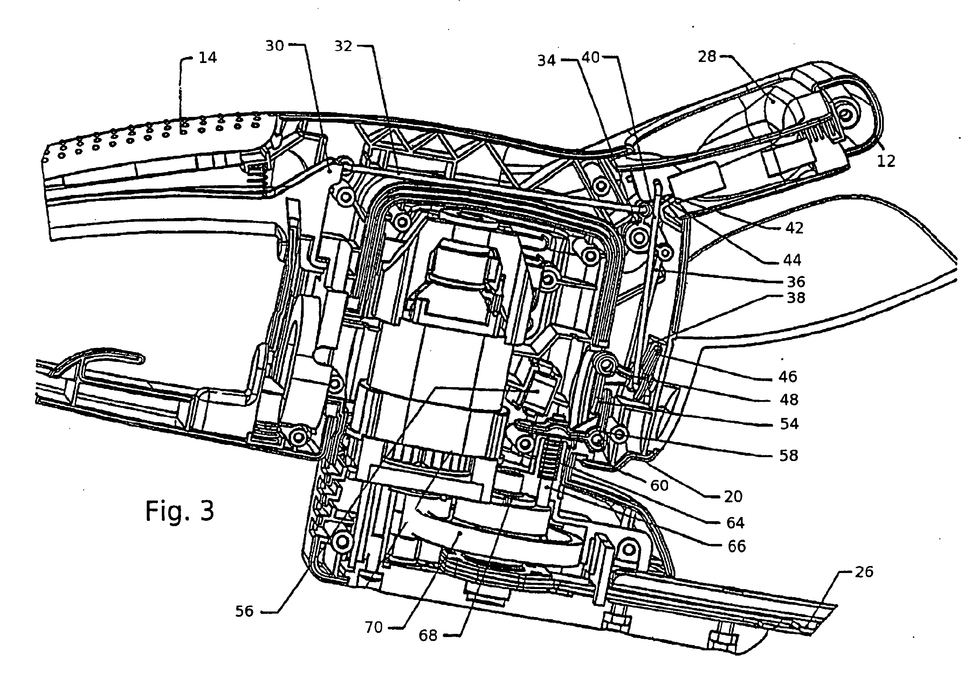

Die Zweihandschaltung muss gewährleisten, dass der Elektromotor nur bei Betätigung beider Schaltbetätigungsglieder 28 und 30 (gleichzeitig oder hintereinander) eingeschaltet werden kann und dass schon bei Loslassen nur eines Schaltbetätigungsgliedes ein Abschalten des Motors und eine augenblickliche Stillsetzung der Messer erfolgt. Dies wird durch ein mechanisches Übertragungsgestänge bewirkt, das aus der Schnittdarstellung gemäß Fig. 3 ersichtlich ist. Danach ist das am vorderen Handgriff 12 angeordnete Schaltbetätigungsglied als Schaltgriff 28 ausgebildet und das hintere Schaltbetätigungsglied ist eine schwenkbare Schaltleiste 30. An der Schaltleiste 30 ist eine horizontale Verbindungsstange 32 angelenkt, die an einem schwenkbar gelagerten Winkelhebel 34 angreift, der die Bewegung auf eine erste vertikale Schaltstange 36 umlenkt, deren Ende an einer ersten Schaltwaage 38 angelenkt ist.

Der bei Betätigung des Schaltgriffs 28 ausgeübte Hub wird über eine schräge Ebene 42 und eine Rolle 44 auf eine zweite Schaltstange 40 übertragen, die an einer zweiten Schaltwaage 46 angreift.

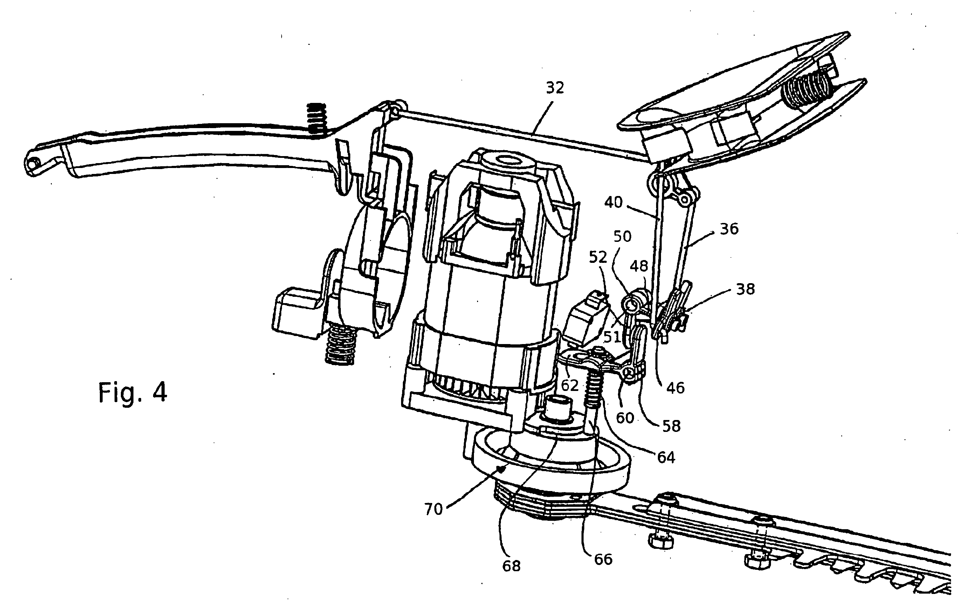

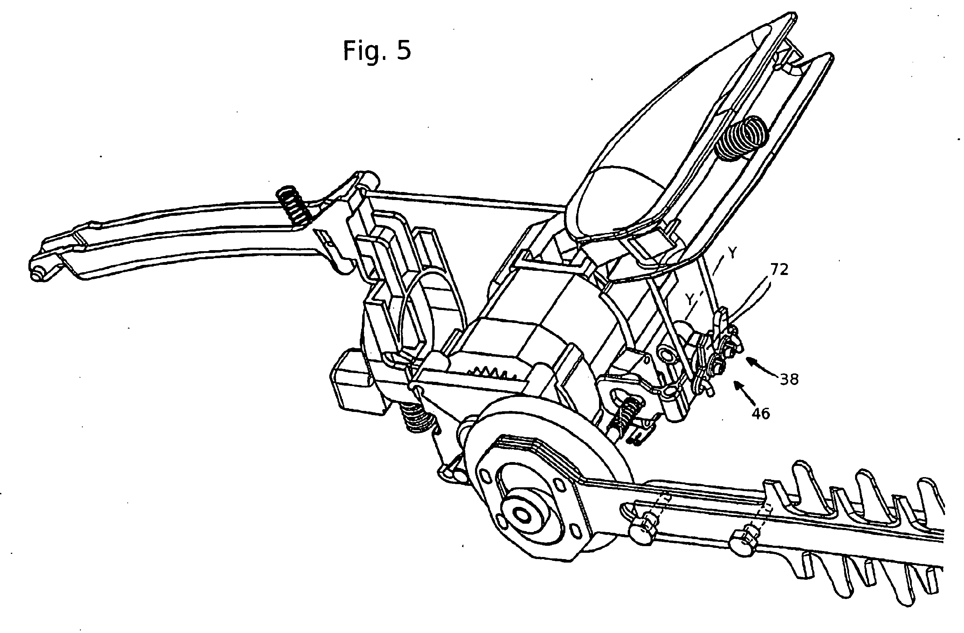

Die Ausbildung und Funktion der Schaltwaagen und des mit ihnen zusammenwirkenden Schaltgestänges ist deutlicher aus den Fig. 4 und 5 ersichtlich. Die Schaltwaagen 38 und 46 sind als Winkelarme ausgebildet, die nebeneinander um parallel zueinander liegende Achsen schwenkbar an dem ersten Schenkel 48 eines um die Achse 51 schwenkbaren Schalthebels 50 montiert sind, der um eine Achse 51 schwenkbar ist und am Ende seines vertikalen Schaltarmes 52 eine Kugelkalotte 54 trägt. Dieser Schalthebel 50 ist ebenso wie das vorstehend erläuterte Betätigungsgestänge innerhalb des Griffgehäuses gelagert. Die Schaltbetätigungs-Übertragung auf den innerhalb des Motorgehäuses angeordneten Motorschalter 56 erfolgt über den Schalthebel 50 auf einen Schaltbügel 58, der im Motorgehäuse um die Achse 60 schwenkbar gelagert ist. Der Schaltbügel 58 trägt eine der Kugelkalotte 54 anliegende Kugelkalotte und die Achsen der beiden Kugelkalotten fallen mit der Drehachse X - X zusammen, um die das Motoraggregat im brückenartigen Griffgehäuse 10 gelagert ist. Der Schaltbügel 58 wirkt mit seinem Schaltarm 62 auf den Motorschalter 56 ein. Der Schaltarm 62 trägt weiter einen durch eine Feder 64 abgestützten Sperrstift 66, der in eine kreisbogenförmige Nut 68 des Exzenterrades 70 einfällt, das im Getriebegehäuse 24 gelagert ist und die Messer 26 hin- und hergehend antreibt.

Die beiden Schaltbetätigungsglieder 28 und 30 bewirken bei ihrer Betätigung über die beiden Schaltstangen 36 und 40 ein Anheben der seitlichen Schenkel der Schaltwaagen 38 und 46, wodurch diese verschwenkt und ihre Anschlagarme 72 gegeneinander verschwenkt werden. Die Anordnung ist dabei derart bemessen, dass bei Betätigung nur eines Schalters (28 oder 30) ein Leerhub erfolgt und die Arme einander nicht berühren können. Werden demgegenüber beide Schalter gleichzeitig betätigt, so berühren sich die Anschlagarme 72 und ein weiteres Anheben der Schaltwaagen überträgt sich auf den sie lagemden Schalthebel 50, so dass dieser den Schaltbügel um die Achse 60 verschwenkt, wobei der Schaltarm 62 den Schalter 56 einschaltet und gleichzeitig den Sperrstift 66 gegen die Wirkung der Feder 64 aus der kreisbogenförmigen Nut 68 aushebt, so dass die Messer anlaufen können.

Wenn die Schaltbetätigungsglieder 28 und 30 nacheinander oder gleichzeitig losgelassen werden, erfolgt eine Rückschwenkung des Schalthebels 50 um seine Achse 51 und der Schaltbügel 58 folgt dieser Bewegung, wobei die Kugelkalotten unter der Wirkung der Feder 64 in Berührung verbleiben und der Schaltarm 62 den Schalter 56 freigibt, so dass dieser öffnet. Dabei rastet der Sperrstift 66 in die kreisbogenförmige Nut 68 ein und innerhalb von 0,02 Sekunden werden die Messer 26 stillgesetzt.

Diese vorstehend beschriebene Schaltbewegung kann in jeder Schwenkstellung des Motoraggregates gegenüber dem Griffgehäuse erfolgen, weil die Bewegungsübertragung zwischen den Kugelkalotten in der Schwenkachse X - X erfolgt, in der die Gelenke 19 bzw. 21 zwischen den Brückenarmen 18 bzw. 20 und dem Motoraggregat 22, 24 liegen.

### Bezugszeichenliste

- 10: Griffgehäuse
- 12: vorderer Handgriff
- 14: hinterer Handgriff
- 16: Schutzschild
- 18: Brückenarm
- 19: Gelenk
- 20: Brückenarm
- 21: Gelenk
- 22: Gehäuse Elektromotor
- 24: Gehäuse Getriebe
- 26: Messer
- 28: Schaltbetätigungsglied (Schaltgriff)
- 30: Schaltbetätigungsglied (Schaltleiste)
- 32: Verbindungsstange
- 34: Winkelhebel
- 36: erste Schaltstange
- 38: erste Schaltwaage
- 40: zweite Schaltstange
- 42: schräge Ebene
- 44: Rolle
- 46: zweite Schaltwaage
- 48: erster Schenkel
- 50: Schalthebel
- 51: Achse
- 52: Schaltarm
- 54: Kugelkalotte
- 56: Motorschalter
- 58: Schaltbügel
- 60: Achse
- 62: Schaltarm
- 64: Feder
- 66: Sperrstift
- 68: kreisbogenförmige Nut
- 70: Exzenterrad
- 72: Anschlagarme

## Patentansprüche

1. Heckenschere für Zweihandbetrieb mit einem einen Vordergriff (12) und einen Hintergriff (14) aufweisenden Griffgehäuse (10), das zwischen den Handgriffen (12, 14) einen die Messer (26) über ein Getriebe (24) antreibenden Elektromotor (22) trägt,
**dadurch gekennzeichnet, dass** das Griffgehäuse (10) brückenartig ausgebildet ist und zwischen seinen Brückenarmen (18, 20) das Motorgehäuse (22) mit den Messern (26) über Gelenke (19, 20) schwenkverstellbar trägt, deren Achsen X-X miteinander fluchten.

2. Heckenschere nach Anspruch 1,
**dadurch gekennzeichnet, dass** Mittel vorgesehen sind, um die gegeneinander verschwenkbaren Teile in mehreren Schwenkstellungen gegeneinander zu verriegeln und dass weiter Mittel vorgesehen sind, die eine Verschwenkung nur bei stillgesetzten Messern (26) ermöglichen.

3. Heckenschere nach den Ansprüchen 1 und 2,
**dadurch gekennzeichnet, dass** zwischen den beiden für Zweihandschaltung ausgebildeten, an den Handgriffen (12, 14) angeordneten Schaltbetätigungsgliedern (28, 30) und dem Motorschalter (56) ein mechanisches Schaltgestänge vorgesehen ist, welches zwischen Griffgehäuse (10) und Motor Schaltmittel (52, 58) aufweist, die eine axiale Bewegungsübertragung in der Schwenkachse X-X in jeder Schwenkstellung bewirken.

4. Heckenschere nach den Ansprüchen 1 und 3,
**dadurch gekennzeichnet, dass** die Schaltmittel (52, 58) einen Sperrstift (66) aufweisen, der in Ruhestellung in eine kreisbogenförmige Nut (68) eines Exzenterrades (70) des Getriebes (24) eingreift und die Messer (26) nach Loslassen eines oder beider Schaltbetätigungsglieder (28, 30) stillsetzt.

5. Heckenschere nach Anspruch 3,
**dadurch gekennzeichnet, dass** Mittel (38, 46) vorgesehen sind, die nur bei gemeinsamem Schalten der Schaltbetätigungsglieder (28, 30) eine Fortschaltung und Anschaltung des Motors (22) bewirken.

6. Heckenschere nach Anspruch 5,
**dadurch gekennzeichnet, dass** die Mittel als Schaltwaagen (38, 46) ausgebildet sind, die mit Anschlagarmen (72) ausgerüstet sind, die bei gemeinsamer Schaltbetätigung aneinanderliegend die weitere Schaltübertragung ermöglichen.

7. Heckenschere nach den Ansprüchen 4 bis 6,
**dadurch gekennzeichnet, dass** die Schaltwaagen (38, 46) nebeneinander auf einem Schalthebel (50) gelagert sind und bei gemeinsamer Betätigung der Schaltwaagen eine Verschwenkung eines Schaltarmes (52) erfolgt, dessen Bewegung über eine Punktberührung in der Drehachse X-X auf einen Schaltbügel (58) übertragen wird, der den Motorschalter (56) und den Sperrstift (66) betätigt.

## Claims

1. A hedge trimmer for two-handed operation comprising a handle housing (10) which has a front handle (12) and a rear handle (14) and which between the handles (12, 14) carries an electric motor (22) driving the blades (26) by way of a transmission (24),
**characterised in that** the handle housing (10) is of a bridge-like configuration and between its bridge arms (18, 20) carries the motor housing (22) with the blades (26) pivotably displaceably by way of pivots (19, 20), the axes X-X of which are aligned with each other.

2. A hedge trimmer according to claim 1 **characterised in that** there are provided means for locking the mutually pivotable parts in a plurality of pivotal positions relative to each other and that there are further provided means which permit pivotal movement only when the blades (26) are stopped.

3. A hedge trimmer according to claims 1 and 2 **characterised in that** provided between the two switch actuating members (28, 30) which are designed for two-handed switching and which are arranged on the handles (12, 14) and the motor switch (56) is a mechanical switching linkage which between the handle housing (10) and the motor has switching means (52, 58) which produce axial movement transmission on the pivot axis X-X in any pivotal position.

4. A hedge trimmer according to claims 1 and 3 **characterised in that** the switching means (52, 58) have a locking pin (66) which in the rest position engages into an arcuate groove (68) of an eccentric wheel (70) of the transmission (24) and stops the blades (26) after one or both switch actuating members (28, 30) is released.

5. A hedge trimmer according to claim 3 **characterised in that** there are provided means (38, 46) which provide for stepping forward and switching on the motor (22) only upon joint switching of the switch actuating members (28, 30).

6. A hedge trimmer according to claim 5 **characterised in that** the means are in the form of switching rockers (38, 46) provided with abutment arms (72) which upon joint switch actuation in a condition of bearing against each other permit further switching transmission.

7. A hedge trimmer according to claims 4 to 6 **characterised in that** the switching rockers (38, 46) are mounted in mutually juxtaposed relationship on a switching lever (50) and upon joint actuation of the switching rockers pivotal movement of a switching arm (52) takes place, the movement of which is transmitted by way of a point contact on the axis of rotation X-X to a switching stirrup (58) which actuates the motor switch (56) and the locking pin (66).

## Revendications

1. Taille-haie à utiliser à deux mains, avec un carter de préhension (10) qui présente une poignée avant (12) et une poignée arrière (14) et qui porte, entre les poignées (12, 14), un moteur électrique (22) entraînant les lames (26) par l'intermédiaire d'un mécanisme de transmission (24),
**caractérisé en ce que** le carter de préhension (10) est réalisé en forme de pont et porte entre ses branches de pont (18, 20) le carter de moteur (22) muni des lames (26) avec possibilité de réglage par pivotement au moyen d'articulations (19, 20) dont les axes X-X sont mutuellement alignés.

2. Taille-haie selon la revendication 1, **caractérisé en ce que** des moyens sont prévus pour verrouiller les parties mutuellement pivotantes dans plusieurs positions relatives de pivotement, et **en ce que** des moyens sont en outre prévus pour ne permettre un pivotement que si les lames (26) sont immobilisées.

3. Taille-haie selon les revendications 1 et 2, **caractérisé en ce qu'**une tringlerie de commutation mécanique est prévue entre d'une part les deux organes (28, 30) d'actionnement d'activation conçus pour une activation à deux mains et disposés sur les poignées (12, 14) et d'autre part le commutateur (56) du moteur, tringlerie qui présente, entre le carter de préhension (10) et le moteur, des moyens de commutation (52, 58) qui produisent une transmission de mouvement axiale dans l'axe de pivotement X-X dans chaque position de pivotement.

4. Taille-haie selon les revendications 1 et 3, **caractérisé en ce que** les moyens de commutation (52, 58) présentent un doigt d'arrêt (66) qui, en position de repos, s'engage dans une rainure en arc de cercle (68) d'une roue excentrique (70) du mécanisme de transmission (24) et immobilise les lames (26) à la suite du relâchement d'un des organes (28, 30) d'actionnement d'activation, ou des deux.

5. Taille-haie selon la revendication 3, **caractérisé en ce que** des moyens (38, 46) sont prévus, qui ne produisent une activation et une poursuite de l'activation du moteur (22) qu'en cas d'activation conjointe des organes (28, 30) d'actionnement d'activation.

6. Taille-haie selon la revendication 5, **caractérisé en ce que** lesdits moyens sont réalisés sous forme de bascules de commutation (38, 46) qui sont équipées de bras de butée (72) qui, lors de l'actionnement conjoint d'activation, permettent de poursuivre la transmission de l'activation en s'appliquant l'un contre l'autre.

7. Taille-haie selon les revendications 4 à 6, **caractérisé en ce que** les bascules de commutation (38, 46) sont montées en juxtaposition sur un levier de
